(19) Europäisches Patentamt
European Patent Office
Office européen des brevets

(11) **EP 0 825 590 A2**

(12) **EUROPEAN PATENT APPLICATION**

(43) Date of publication:
**25.02.1998 Bulletin 1998/09**

(51) Int. Cl.$^6$: **G11B 7/007**, G11B 7/013,
G11B 7/24, G11B 7/26

(21) Application number: **97113904.3**

(22) Date of filing: **12.08.1997**

(84) Designated Contracting States:
**AT BE CH DE DK ES FI FR GB GR IE IT LI LU MC NL PT SE**

(30) Priority: **20.08.1996 JP 218682/96**

(71) Applicant:
**KABUSHIKI KAISHA TOSHIBA
Kawasaki-shi (JP)**

(72) Inventor: **Kobayashi, Tadashi**
**1-1 Shibaura 1-chome,Minato-ku Tokyo 105 (JP)**

(74) Representative:
**Henkel, Feiler, Hänzel & Partner
Möhlstrasse 37
81675 München (DE)**

(54) **Information recording medium adapted for use in land groove recording**

(57)    An information recording medium for land·groove recording (16), which comprises a substrate (1) provided with a land·groove, and a recording film (3) which is formed on said substrate (1) and capable of generating a phase-change from a crystal state to an amorphous state and vice versa, wherein a step height between the land and the groove on the front surface of said recording film (3) is confined to the range represented by the following formula (1),

$$\lambda/(6n) \leqq d_s \leqq \lambda/(5n) \qquad (1)$$

where $d_s$ is a step height between the land and the groove on the front surface of said recording film (3), $\lambda$ is a wavelength of light beam to be employed in a reproduction, and n is a refractive index of said substrate (1).

FIG. 1

## Description

This invention relates to an information recording medium, and in particular to an information recording medium which is adapted for use in a land·groove recording.

A so-called land·groove recording wherein information can be recorded in both land and groove of an optical disk is advantageous in enhancing the density of the optical disk. However, this recording method is generally accompanied with a problem of prominency in crosstalk. In view of overcoming this problem, a method of reducing the crosstalk has been proposed wherein the groove depth in the substrate is set to a predetermined range {(A high density phase-change type optical disk employing a land·groove recording); Ohno et al, pp. 114-119 of a lecture text for the symposium in the 5th meeting in 1993 of the Phase-Change Recording Study Group}.

According to this document, the reduction of crosstalk is attempted by using only the wavelength $\lambda$ of light beam to be employed in the reproduction and by setting the groove depth of the substrate to the range of ($\lambda/6$) to ($\lambda/5$).

However, depending on the laminated structure and material of the recording film, it is impossible to avoid the generation of a difference in level of reproducing signal between the land and the groove, or the generation of crosstalk. These phenomena will be generated more prominently particularly when the film thickness of the passivation film (protective film) to be formed between the recording film and the substrate is relatively thick.

As explained above, no one has succeeded as yet to obtain an information recording medium for land·groove recording, which is capable of reducing crosstalk taking into account the thickness or structure of the film to be formed on the substrate.

Therefore, the object of the present invention is to provide an information recording medium for land·groove recording, which is capable of minimizing the crosstalk even if the structure of film to be formed on the substrate is altered.

Namely, according to one embodiment of this invention, there is provided an information recording medium for land·groove recording, which comprises a substrate provided with a land·groove; and a recording film which is capable of generating a phase-change from a crystal state to an amorphous state and vice versa; wherein a step height (a difference in level) between the land and the groove on the front surface of said recording film is confined to the range represented by the following formula (1);

$$\lambda/(6n) \leqq d_s \leqq \lambda/(5n) \qquad (1)$$

where $d_s$ is a step height between the land and the groove on the front surface of said recording film; $\lambda$ is a wavelength of light beam to be employed in a reproduction; and n is a refractive index of said substrate.

According to another embodiment of this invention, there is further provided an information recording medium for land·groove recording, which comprises a substrate provided with a land·groove; a passivation film formed on said substrate; and a recording film formed on said passivation film; wherein a film thickness of said passivation film formed on the land is almost the same as that formed on the groove.

According to another embodiment of this invention, there is also provided an information recording medium for land·groove recording, which comprises a substrate provided with a land·groove; a passivation film formed on said substrate; and a recording film formed on said passivation film; wherein a groove depth of said substrate is almost equivalent to a step height between said land and said groove at an interface between said passivation film and said recording film.

According to still another embodiment of this invention, there is also provided an information recording medium for land·groove recording, which comprises a substrate provided with a land·groove; a passivation film formed on said substrate; and a recording film formed on said passivation film; wherein a width of said land is almost the same as that of said groove at an interface between said passivation film and said recording film.

According to still another embodiment of this invention, there is also provided an information recording medium for land·groove recording, which comprises a substrate provided with a land·groove; a passivation film formed on said substrate; and a recording film formed on said passivation film; wherein, as far as a portion of address mark which is recorded with a single cycle is concerned, a length of opening of a pit in the direction of track is almost the same as that of a portion other than said opening of pit at an interface between said passivation film and said recording film.

According to still another embodiment of this invention, there is also provided an information recording medium for land·groove recording, which comprises a substrate provided with a land·groove; a passivation film formed on said substrate; and a recording film formed on said passivation film; wherein, as far as an interface between said passivation film and said recording film is concerned, a length of opening of an address mark in a direction perpendicular to the track is almost the same as a length in said direction of a portion adjacent to and other than said opening of address mark.

According to still another embodiment of this invention, there is also provided a method of forming a passivation film on a substrate provided with a land·groove by means of a sputtering method, wherein a sputtering source is injected at an incident angle represented by the following formula (4);

$$\theta > \arctan (d_k/T_g) \qquad (4)$$

where θ is an incident angle to the substrate of the sputtering source; $d_k$ is a groove depth of the substrate; and $T_g$ is a groove width of the substrate.

According to still another embodiment of this invention, there is also provided an apparatus for forming a passivation film on a substrate provided with a land · groove by means of a sputtering method, wherein a target material is arranged such that the sputtering source can be injected at an angle meeting a relationship represented by the following formula (5);

$$\theta_s > \arctan (d_k/T_g) \qquad (5)$$

wherein $\theta_s$ is an angle formed between a direction of the sputtering source directed from said target material to the substrate and a main surface of the substrate; $d_k$ is a groove depth of the substrate; and $T_g$ is a groove width of the substrate.

This invention can be more fully understood from the following detailed description when taken in conjunction with the accompanying drawings, in which:

FIG. 1 is a cross-sectional view schematically showing one example of an information recording medium for a land · groove recording according to this invention;

FIG. 2 is a diagram showing a relationship between the film thickness of a passivation film and the reflectance of a recording film;

FIG. 3 is a diagram showing a relationship between the film thickness of a passivation film and the reflectance of a recording film;

FIG. 4 is a diagram showing a relationship between the film thickness of a recording film and the reflectance of a recording film, and between the film thickness of a recording film and the phase change of the recording film;

FIG. 5 is a diagram showing a relationship between recording peak power and the CNR (CARRIER-TO-NOISE RATIO);

FIG. 6 is a diagram showing a relationship between the step height of the land groove and the crosstalk;

FIG. 7 is a cross-sectional view schematically showing the section of the substrate;

FIG. 8 is a block diagram schematically showing a sputtering apparatus for forming a passivation film on the substrate;

FIG. 9 is a cross-sectional view schematically showing a state after a passivation film is formed on the substrate;

FIG. 10 is a diagram showing the recording characteristic of an information recording medium according to this invention;

FIG. 11 is a diagram showing the recording characteristic of an information recording medium according to a comparative example;

FIG. 12 is a schematic view of an information recording medium;

FIG. 13 is an enlarged view showing an address mark region;

FIG. 14 is an enlarged view showing an address mark region at the land · groove-switching portion;

FIG. 15 is an enlarged view showing a pit; and

FIG. 16 is a plan view for explaining the width and distance of a pit in the direction of track.

This invention will be further explained in detail with reference to the examples and the comparative examples, which are not intended to limit the scope of this invention.

(Example 1)

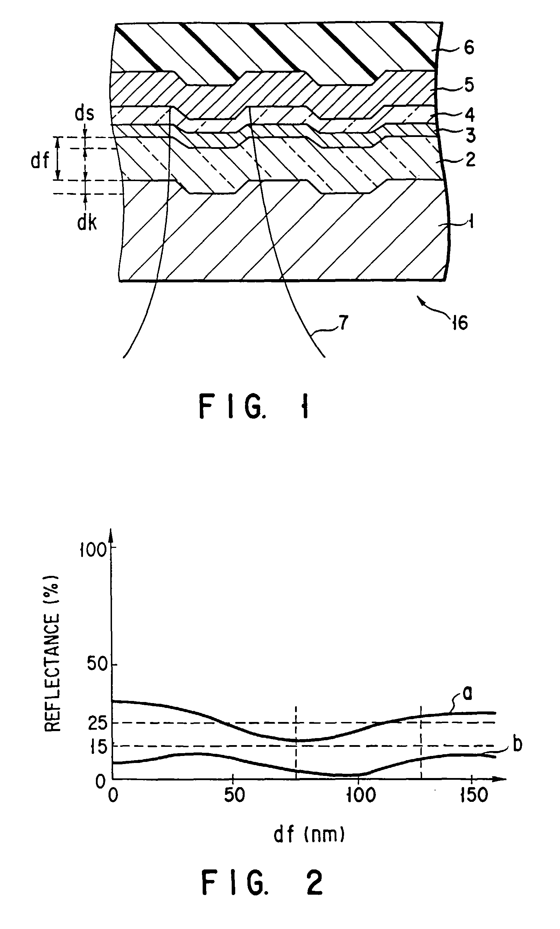

FIG. 1 is a cross-sectional view schematically showing one example of an information recording medium for a land · groove recording according to this invention. Referring to FIG. 1, the recording medium 16 comprises a substrate 1 provided with a land · groove having a step height $d_k$ on which a passivation film 2, a recording film 3, a passivation film 4 and a reflective film 5 are successively deposited in the mentioned order by means of a sputtering method. Furthermore, an over-coat film 6 is formed on the reflective film 5 by means of a spin-coating method. In this FIG., the film thickness of the passivation film 2 is represented by $d_f$. On the other hand, the step height between the land and groove at the surface of the recording film 3 that faces the substrate 1 is represented by $d_s$. Accordingly, this $d_s$ may be defined as being a step height between the land and groove at an interface between the passivation film 2 and recording film 3.

As for the materials for these passivation films 2 and 4, a transparent dielectric substance such as ZnS, $SiO_2$, AlN, $Al_2O_3$ and SiN for example may be generally employed. As for the materials for the recording film 3, a material which capable of exhibiting a phase change from a crystal state to an amorphous state and vice versa, such as GeSbTe, InSbTe, etc. may be employed. As for the material for the reflective film 5, a metallic film such as Al, Au, an Al alloy, etc. may be employed. As for the material for the over-coat film 6, an ultraviolet-curing thermosetting resin, etc. may be employed.

According to the information recording medium of this invention, the step height $d_s$ of the land and groove at the interface between the passivation film 2 and the recording film 3 is set to the range of λ/6n to λ/5n (n is a refractive index of the substrate). It is preferable for the information recording medium of this invention to set the film thickness $d_f$ of the passivation film 2 to such that the reflectance in the amorphous state of the recording film 3 becomes minimum. Even if a record mark (amorphous) exists in a track neighboring to a recording track, it is possible with this construction to minimize the reflectance from this neighboring record mark, thereby inhibiting the generation of crosstalk.

In this case, as described in Ohno et al, when the

groove depth $d_k$ of the substrate 1 is set to the range of $\lambda/6$ to $\lambda/5$, the depth $d_s$ of the groove on the passivation film does not necessarily correspond with the groove depth $d_k$ on the substrate, though it depends on the film thickness of the passivation film 2 to be formed on the substrate and on the film-forming condition.

The present inventors have taken notice of the facts that not only the groove depth of the substrate but also the structure of layers to be formed on the substrate have an influence on the generation of crosstalk. Namely, according to this invention, for the purpose of inhibiting the generation of crosstalk, the step height $d_s$ of the land and groove on the front surface the recording film 3 is set to the range of $\lambda/6n$ to $\lambda/5n$ (n is a refractive index of the substrate), and at the same time, the film thickness $d_f$ of the passivation film 2 is set to such that the reflectance in the amorphous state of the recording film 3 becomes nearly minimum.

FIG. 2 shows changes in reflectance of a recording film of this invention as the film thickness $d_f$ of a passivation film 2 is changed. In this case, the reflectance was calculated under the conditions that the passivation films 2 and 4 were formed with a ZnS-based material, the recording film 3 and the reflective film 5 were formed with a GeSbTe-based material and an Al alloy, respectively, and the wavelength $\lambda$ of reproducing light was set to 680 nm. In FIG. 2, the curve "a" represents changes in reflectance when the recording film 3 is in a state of crystal, whereas the curve "b" represents changes in reflectance when the recording film 3 is taking an amorphous state.

It can be seen from the curve "b" that when the film thickness $d_f$ of a passivation film 2 is close to 100 nm, the reflectance in the amorphous state of the recording film becomes minimum, i.e. nearly zero. Therefore, it is possible to minimize the generation of crosstalk by setting the film thickness of the passivation film 2 to such that the reflectance in the amorphous state of the recording film 3 becomes minimum.

In the foregoing example, this invention has been explained on a case where a ZnS-based material is employed as a passivation film. However, this invention should not be construed to be limited by this example, i.e. it is possible in viewpoint of optical design to employ any kind of dielectric material as long as it enables the refractive index of the passivation film to fall within the range of from 1.5 to 2.5.

(Example 2)

If the film thickness of the passivation film 2 is set to such that the reflectance in the amorphous state (the curve "b") of the recording film 3 becomes minimum as shown in FIG. 2, the reflectance in the crystalline state (the curve "a") of the recording film 3 becomes nearly minimum. Therefore, even if the film thickness of the passivation film 2 is set to such that the reflectance in the crystalline state of the recording film 3 becomes nearly minimum, it is possible to minimize the generation of crosstalk in the same manner as mentioned above.

(Example 3)

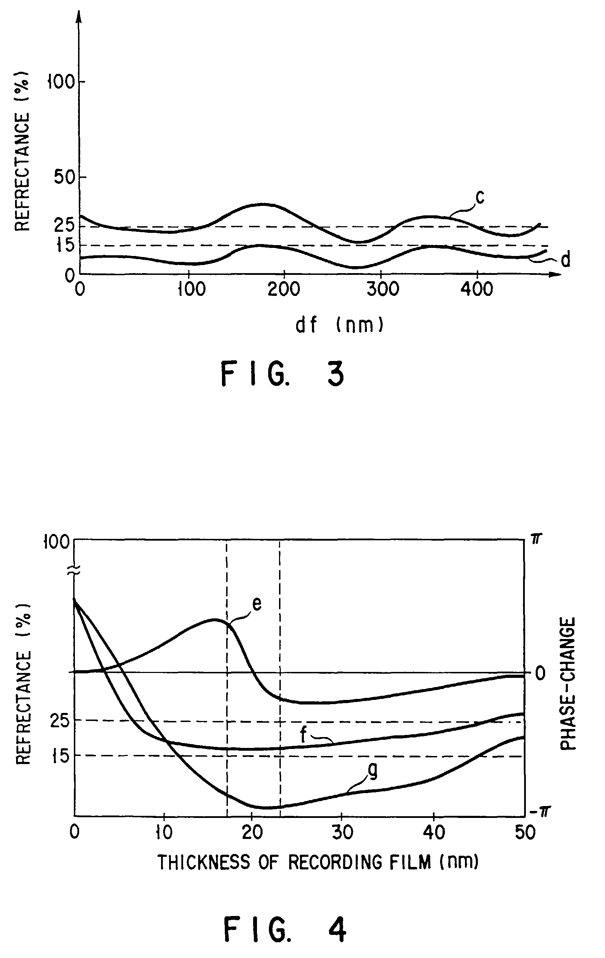

FIG. 3 shows changes in reflectance of a recording film of this invention as the film thickness $d_f$ of the passivation film 2 is further thickened. In FIG. 3, the curve "c" denotes changes in reflectance of the recording film 2 taking a crystalline state, whereas the curve "d" denotes changes in reflectance of the recording film 2 taking an amorphous state.

As shown in FIG. 3, as the film thickness $d_f$ of the passivation film 2 is increased, the reflectance is periodically fluctuated. Namely, the minimum value of the reflectance of the recording film is also caused to appear periodically. The film thickness of the passivation film 2 may be set not only to the initial film thickness where the reflectance in the amorphous state of the recording film 3 becomes minimum at first, but also to a film thickness where the reflectance in the amorphous state of the recording film 3 becomes nearly minimum for the second time or more. When a thermal damage to the substrate due to a repetition of overwrite of the phase-change type recording medium 3 is taken into consideration, the film thickness of passivation film 2 should desirably be as large as possible. However, if the film thickness of the passivation film 2 is to be increased to an excessive extent, a longer period of time is required for forming the passivation film 2, thereby deteriorating the productivity of the device. Accordingly, in a practical view-point, the film thickness of the passivation film should preferably be set to the one where the reflectance in the amorphous state of the recording film 3 becomes nearly minimum at the second cycle.

(Example 4)

If the film thickness of the passivation film 2 is set to such that the reflectance in the amorphous state (the curve "d") of the recording film 3 becomes minimum as shown in FIG. 3, the reflectance in the crystalline state (the curve "c") of the recording film 3 becomes nearly minimum. Therefore, even if the film thickness of the passivation film 2 is set to such that the reflectance in the crystalline state of the recording film 3 becomes nearly minimum, it is possible to minimize the generation of crosstalk in the same manner as mentioned above.

(Example 5)

The phase-change of the recording film was taken notice of in this example. If the phase of the recording film changes depending on the state which the recording film takes, i.e. a crystalline state or an amorphous state, the magnitude of reproducing signal also changes at the land • groove, thus making it difficult to inhibit the generation of crosstalk. Therefore, the change in phase of the recording film due to a difference in state between the crystalline state and the amorphous state should desirably be avoided as much as possible.

FIG. 4 shows a relationship between the film thickness of a recording film and the reflectance of a recording film, and between the film thickness of a recording film and the phase change of the recording film. In this case, the recording medium is of the same laminate structure as shown in FIG. 1, and the film thickness of the recording film 3 was altered. In FIG. 4, the curve "e" denotes a phase difference, the curve "f" denotes changes in reflectance when the recording film is in the state of crystal, and the curve "g" denotes changes in reflectance when the recording film is in an amorphous state. As shown in FIG. 4, when the film thickness of the recording film is such that the phase difference (curve "e") becomes zero, the reflectance (curve "g") in the amorphous state of the recording film becomes nearly minimum, and under the condition of this film thickness, the magnitude in change of the reflectance between the amorphous state (curve "g") and the crystalline state (curve "f") becomes large. Therefore, it is possible to obtain a land • groove recording medium which is capable of suppressing the crosstalk by setting the film thickness of the passivation film 2 to such that the phase difference of the recording medium between the crystal/amorphous states becomes nearly zero, and the reflectance in the amorphous state of the recording film 2 becomes nearly minimum, and by setting the step height $d_s$ of the land • groove at an interface between the passivation film and the recording film 3 to the range of $\lambda/6n$ to $\lambda/5n$.

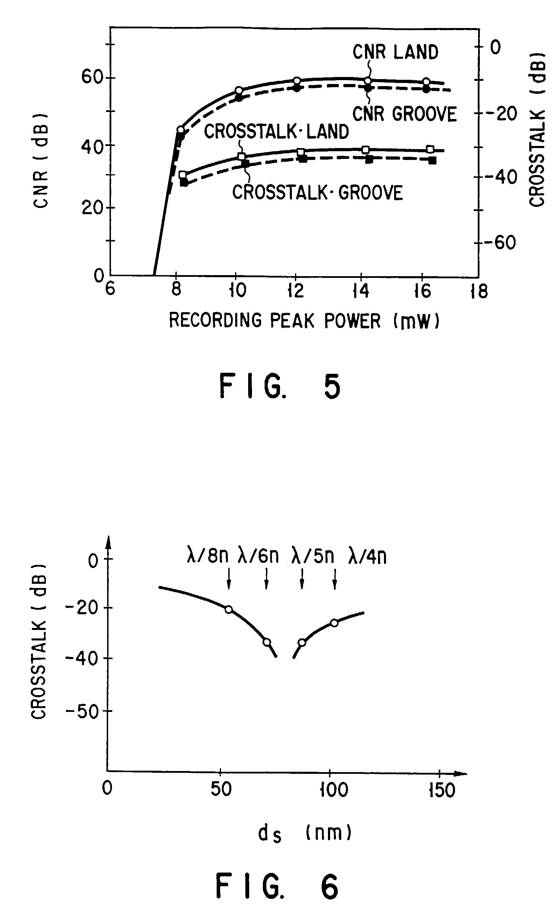

FIG. 5 shows the results of evaluations on the CNR and crosstalk of the recording medium which was manufactured to meet the aforementioned conditions and provided with a laminate structure as shown in FIG. 1. Specifically, the film thickness of the recording film 3 was set to 20 nm in order to make the phase difference of the recording medium between the crystal/amorphous states reduced to nearly zero; the film thickness of the passivation film 2 was set to 270 nm in order to make the reflectance in amorphous state of the recording film reduced to nearly minimum; the film thickness of the passivation film 4 was set to 20 nm; and the film thickness of the reflective film 5 was set to 50 nm.

By the way, the land width and the groove width on the substrate were both set to 0.7 μm, and the step height $d_s$ of the land • groove at an interface between the passivation film 2 and the recording film 3 was set to 73 nm, which was equivalent to a wavelength of $\lambda/6n$. Furthermore, a reproducing light having wavelength $\lambda$ of 680 pm and an objective lens having an NA of 0.6 were employed, and the linear velocity of the light was set to 6m/s constant. Under these conditions, the CNR of the land • groove at the moment when the 3T closest packed mark of 8/16 modulation was recorded was measured. Furthermore, the mark of 11T was recorded on the side tracks disposed on both sides in an adjoining track consisting of land/groove/land or groove/land/groove, and at the same time, the crosstalk in the central track was measured.

The diagram in FIG. 5 indicates that if the film thickness of the passivation film 2 is set to such that the phase difference of the recording medium between the crystal/amorphous states can be minimized, and such that the reflectance in the amorphous state of the recording film 2 becomes nearly minimum, the level in CNR of the land • groove can be made uniform and at the same time, the level of the crosstalk can also be uniformly controlled to not more than -30 dB.

FIG. 6 shows a relationship between the step height $d_s$ of the land • groove at the interface of the passivation film-recording film and the crosstalk. The recording medium employed herein was of the same structure as mentioned above, and the wavelength of the reproducing light was set to 680 nm. The dimension of the step height $d_s$ was measured as follows. Namely, the disk was cut off in the radius direction of the track, and then a flake of the cut section was prepared by making use of a microtome. Then, this flake was observed using a transmission type electron microscope to measure the step height $d_s$.

FIG. 6 indicates that even in this case, if the step height $d_s$ at an interface of the passivation film-recording film is limited within the range of $\lambda/6n$ to $\lambda/5n$, the crosstalk can be suppressed to not more than -30 dB.

(Example 6)

As explained above with reference to Example 1, the groove depth $d_k$ of the substrate after the passivation film 2 has been once formed on the substrate 1 would not necessarily be reflected upon the step height $d_s$ of the land • groove at the interface of the passivation film-recording film. For example, if the passivation film is formed from an extremely slantwise direction by means of sputtering, the projected portion of the substrate formed by the grooves functions as a mask so that a thin passivation film will be formed at the groove portion, while a thick passivation film will be formed at the land portion. Therefore, in this case, the value of the step height $d_s$ of the land • groove at the interface of the passivation film-recording film becomes larger than the value of the groove depth $d_k$ of the substrate. In order to realize the equation of $d_k = d_s$, the sputtering source is required to be performed at an incident angle $\theta$ represented by the following formula;

$$\theta > \arctan (d_k/T_g)$$

where $T_g$ is a groove width.

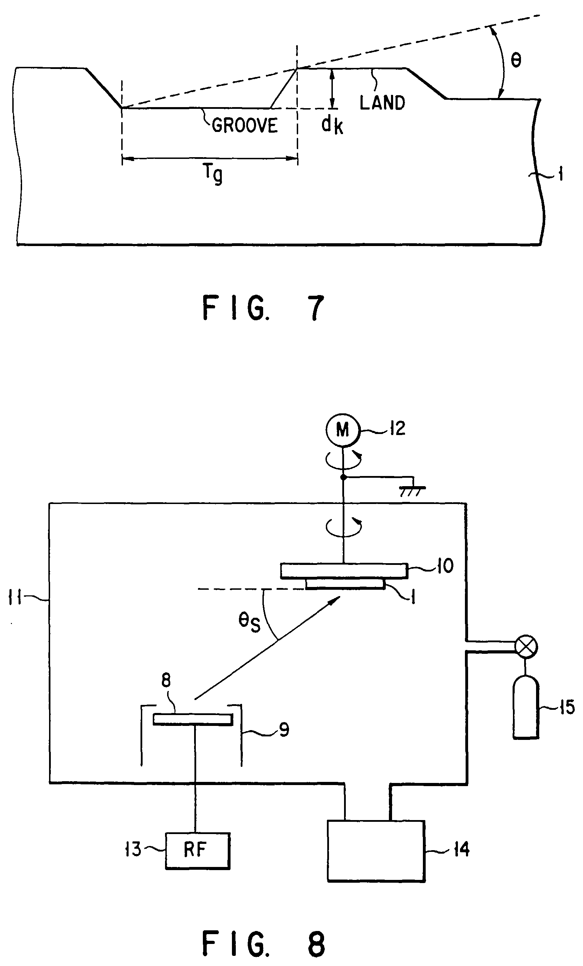

Next, the incident angle $\theta$ of the sputtering source will be explained with reference to FIGS. 7 and 8.

FIG. 7 schematically illustrates a section of the substrate. If the sputtering source is injected slantwise, the land portion acts as a wall so that the groove is rendered into a masked state under the condition of $\theta < \arctan(d_K/T_g)$. Therefore, a thin passivation film will be formed at the groove portion, while a thick passivation film will be formed at the land portion.

FIG. 8 shows a schematic view of the sputtering apparatus, wherein the arrangement of the substrate in relative to the target material for the passivation film is illustrate. In order to form a passivation film meeting the equation of $d_K = d_s$, the angle $\theta_s$ between the target material 8 and the substrate 1, i.e. an angle formed between the direction of sputtering source toward the substrate 1 and the main surface of the substrate 1 is required to meet the following conditions;

$$\theta_s > \arctan(d_K/T_g)$$

As shown in FIG. 8, the sputtering apparatus is provided with a vacuum chamber 11, in which a target material 8, an RF or DC power source 13 for impressing a voltage on the target 8, a shielding member 9 of the target, a substrate holder 10 for fixing the substrate 1, and a motor 12 for rotating the substrate 1 (the substrate 1 is earthed) are housed. The interior of the vacuum chamber 11 is adapted to be evacuated to a predetermined degree of vacuum by means of an exhauster 14. At the occasion of forming a passivation film on the substrate 1, a sputtering gas is introduced from an Ar gas cylinder into the vacuum chamber 11, and a predetermined voltage is impressed between the target 8 and the substrate 1.

A target material is disposed at a predetermined angle as mentioned above, and the target material is injected onto the substrates, thereby forming a passivation film having a uniform film thickness on the land portion as well as on the groove portion.

(Example 7)

Since the light beam irradiated from the substrate side as shown in FIG. 1 is focused at the recording film, the width of the land should preferably be identical with the width of the groove at the substrate side of the recording film, i.e. the front side of the recording film.

In the case where the passivation film 2 is formed on the substrate 1, the width of the groove on the surface of the passivation film 2 becomes smaller while the width of the land becomes larger with an increase in thickness of the passivation film 2. Namely, when the groove width of the substrate is indicated as $l_G$, the land width of the substrate as $l_L$, the groove width at the front surface of the recording film as $f_G$, the land width at the front surface of the recording film as $f_L$, they can be expressed by the following relationships.

$$f_G < l_G;$$

$$f_L > l_L.$$

It is preferable in the case of the land·groove recording to make uniform the reproducing signal levels of both land and groove. In order to realize this, the width of both groove and land is required to satisfy the equation of $f_G = f_L$ at the front surface of the recording film. In this case, if the width of both groove and land is set in advance to $l_G > l_L$ at the substrate, the land width can be made identical with the groove width after the formation of the passivation film. Namely, when the track pitch of the substrate is constant, the groove width should be formed larger than the land width at the substrate. After a passivation film is formed on such a substrate, the land width can be made identical with the groove width at the front surface of the recording film.

By the way, according to Ohno et al, the groove width and the land width at the substrate is set to $l_G = l_L$ without taking the film thickness of the passivation film into consideration, so that the groove width and the land width at the front surface of the recording film after the deposition of the passivation film will exhibit the relationship of $f_G < f_L$. Accordingly, the signal level of the land becomes inevitably higher than that of the groove at the land·groove.

According to this invention however, the ratio between the groove width and the land width (groove width/land width) at the interface of the passivation film-recording film should preferably be set to 0.85 to 1.15, since there is a tolerance of about ± 15%. In order to obtain the groove width/land width ratio of this range at the interface of the passivation film-recording film, the groove width of the substrate should desirably be set to 1.05 to 1.15 times larger than the land width. In this case, the depth of step height between the land and the groove at the interface of the passivation film-recording film may be set to the range of 70 to 90 nm. Information that has been recorded in this recording medium can be reproduced with a light beam having a wavelength ranging from 600 to 700 nm.

(Example 8)

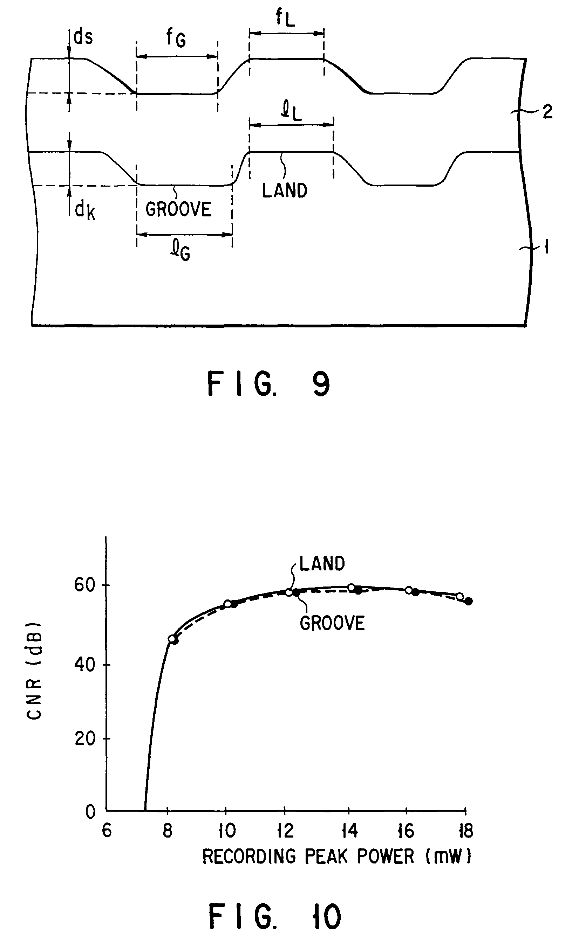

FIG. 10 shows the characteristic of a disk employing a substrate which has a land portion meeting the aforementioned conditions. The disk employed herein was manufactured by forming a laminate structure similar to that shown in FIG. 5 on a substrate having a land portion meeting the aforementioned conditions. Then, evaluation of the disk was made in the same manner as in Example 5, the results being shown in FIG. 10.

The groove width of the substrate was set to 0.74 µm, the land width to 0.66 µm. After the formation of the passivation film 2 on the substrate, a recording film 3 was formed on this passivation film 2. The front surface of the recording film 3, i.e. the groove width and the land width at the interface of the passivation film-recording film were set respectively to the same value of about 0.7

μm. As a result, as shown in FIG. 10, the CNR of this disk was almost the same in both land and groove.

For the purpose of comparison, by the employment of a substrate where the groove width was identical with the land width, a passivation film and a recording film were deposited on the substrate in the same manner as mentioned above to prepare a recording medium. Since the groove width was identical with the land width ($I_G = I_L$), the groove width and the land width at the front surface of the recording film which was formed via the passivation film on the substrate exhibited a relationship of $f_G < f_L$.

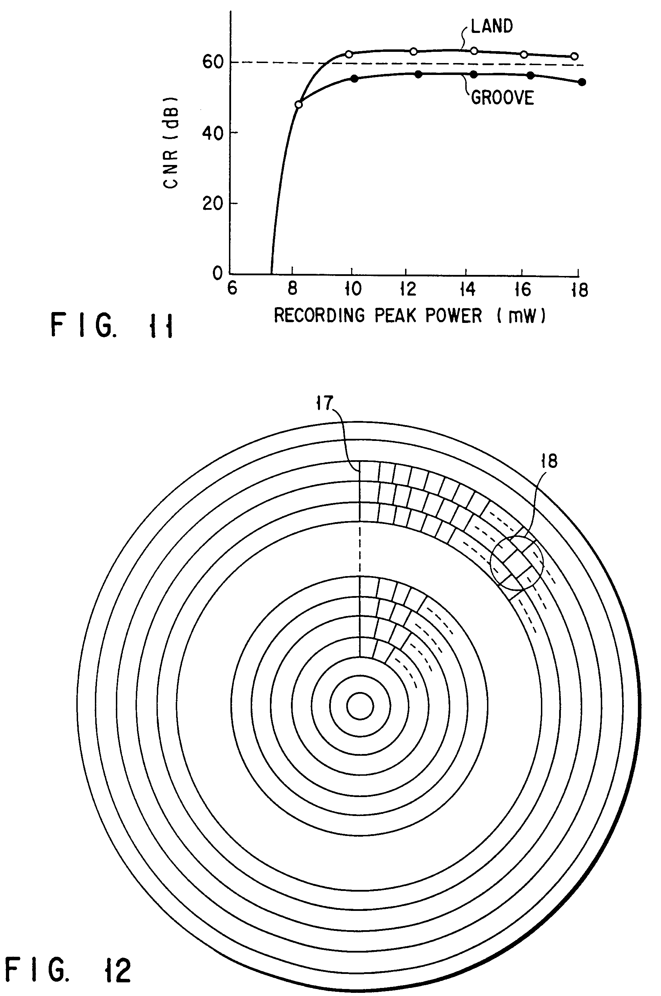

The recording medium thus obtained was evaluated in the same manner as mentioned above, the results being shown in FIG. 11. As seen from FIG. 11, since the groove width is smaller than the land width at the front surface of the recording film ($f_G < f_L$), the CNR of the land was higher than that of the groove by 5 dB.

(Example 9)

In the above examples, although an information recording medium for land·groove recording of this invention has been explained by taking notice of the depth of the step height and the width of the land·groove, this invention is not limited to these examples. In the followings, other kinds of information recording medium for land·groove recording of this invention will be explained.

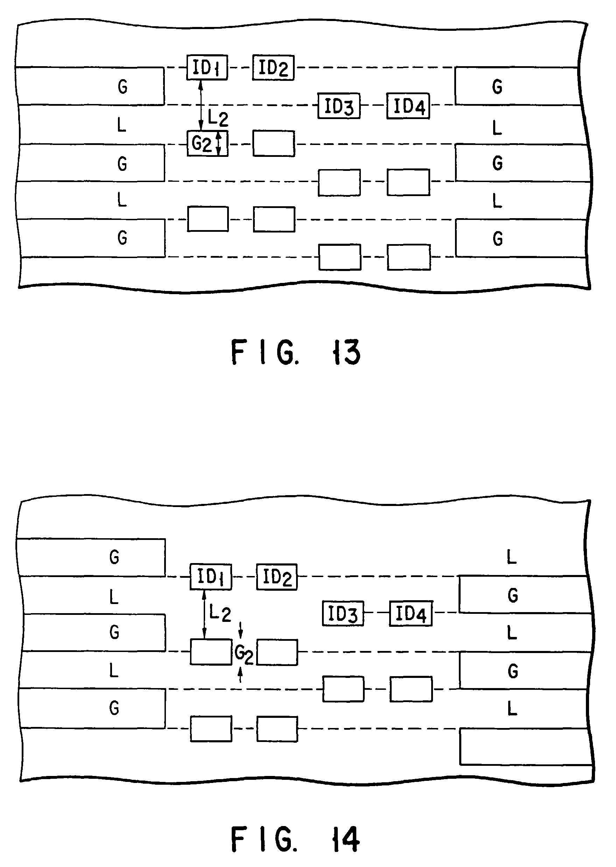

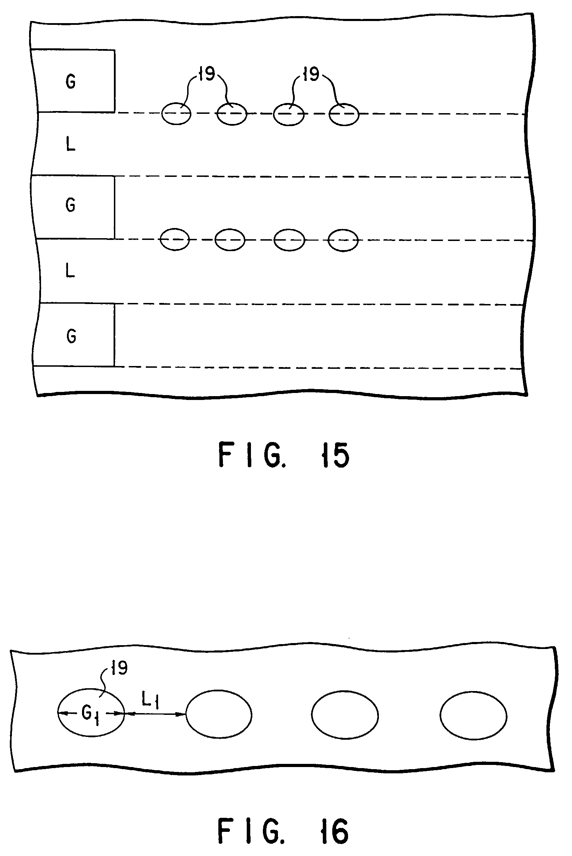

FIG. 12 is a plan view schematically illustrating an information recording medium according to this invention. Referring to FIG. 12, address marks are formed on the switching portion 17 of the land·groove as well as on the switching-free portion 18 of the land·groove for instance. Enlarged views of these switching-free portion 18 and switching portion 17 are shown in FIGS. 13 and 14, respectively. Additionally, an enlarged view of the address mark portion is shown in FIG. 15.

As shown in FIG. 15, in the address mark portion, pits are formed in a single cycle. This pit corresponds to the groove, whereas the interval between pits corresponds to the land. Accordingly, if the width and interval of the pit are regulated to have a predetermined relationship, the same effects as mentioned above would be obtained.

FIG. 16 shows an enlarged view of a plurality of the pits. If the length $G_1$, in the direction of track, of the opening of the pit is made almost identical with the length $L_1$, in the direction of track, of the portion other than the opening of the pit, it is possible to obtain the same effects that would be obtained when the width of land is made identical with the width of groove at the interface of the passivation film-recording film.

In this case, the length $G_1'$, in the direction of track, of the opening of the pit and the length $L_1'$, in the direction of track, of the portion other than the opening of the pit satisfy the relationship of $G_1' > L_1'$ on the surface of the substrate.

As for the direction perpendicular to the track at the interface between the passivation film and the recording film, the width and interval of the mark are indicated by "$G_2$" and "$L_2$", respectively as shown in FIGS. 13 and 14, and if the double of width $G_2$ of the mark is made identical with the interval $L_2$, the same effects as mentioned above would be obtained. The width $G_2$ corresponds to a length, in the direction of opening of the address mark in perpendicular to the direction of track on the substrate. The interval $L_2$ corresponds to a length of a portion other than the opening of the address mark in perpendicular to the direction of track on the substrate.

In this case, the width $G_2'$, in perpendicular to the track, of the pit and the interval $L_2'$, in perpendicular to the track, of the pit satisfy the relationship of $2G_2' \geq L_2'$ on the surface of the substrate.

(Example 10)

In the foregoing examples, an information recording medium wherein a passivation film is formed on the substrate has been explained. However, this invention is not limited to such a structure. For example, since the land width and groove width at the front surface of the recording film, the step height of land·groove, and the width and interval of the pit are the essential features in the information recording medium for land·groove recording of this invention, a plurality of passivation films may be laminated on the front surface of the recording film. Furthermore, the passivation film may be of a laminate structure comprising a translucent film and a dielectric film, or of a layer comprising a mixture of these materials.

As explained above, according to this invention, since the level of the reproducing signal can be made uniform in both of the land and groove, it is possible to easily achieve the binarization of the land and groove, thereby making it possible to provide an information recording medium for land·groove recording which is capable of minimizing the load on the driving.

Furthermore, since this recording medium is capable of suitably minimizing the crosstalk even if the structure of laminate layer is altered, it is possible according to this invention to solve all of the problems accompanied with the conventional recording medium, such as a discrepancy in level of reproducing signal depending on the land and groove which is induced from the specific laminate structure of the film, or the generation of crosstalk in a land·groove recording. Therefore, this invention is very valuable in industrial viewpoint.

**Claims**

1. An information recording medium for land·groove recording (16), which comprises;

   a substrate (1) provided with a land·groove;

and

a recording film (3) which is formed on said substrate (1) and capable of generating a phase-change from a crystal state to an amorphous state and vice versa;

wherein a step height between the land and the groove on the front surface of said recording film is confined to the range represented by the following formula (1);

$$\lambda/(6n) \leqq d_s \leqq \lambda/(5n) \qquad (1)$$

where $d_s$ is a step height between the land and the groove on the front surface of said recording film; $\lambda$ is a wavelength of light beam to be employed in a reproduction; and n is a refractive index of said substrate.

2. The information recording medium for land • groove recording according to claim 1, characterized in that a passivation film (2) is interposed between said substrate (1) and said recording film (3), a film thickness of said passivation film being set to such that the reflectance in an amorphous state of said recording film becomes nearly minimum.

3. The information recording medium for land • groove recording according to claim 2, characterized in that said passivation film (2) is formed of a dielectric film having a film thickness ranging from 50 to 150 nm and a refractive index falling within the range of from 1.5 to 2.5; said step height at the land • groove on the front surface of said recording film is set to the range of from 70 to 90 nm; and said recording is adapted to be reproduced with a light beam having a wavelength ranging from 600 to 700 nm.

4. An information recording medium for land • groove recording (16), which comprises;

a substrate (1) provided with a land • groove;
a passivation film (2) formed on said substrate; and
a recording film (3) which is formed on said passivation film (2) and capable of generating a phase-change from a crystal state to an amorphous state and vice versa;

wherein a step height between the land and the groove at an interface between said recording film (3) and the passivation film (2) is confined to the range represented by the following formula (1);

$$\lambda/(6n) \leqq d_s \leqq \lambda/(5n) \qquad (1)$$

where $d_s$ is a step height of the land • groove at an interface between said recording film (3) and the passivation film (2); $\lambda$ is a wave-

length of light beam to be employed in a reproduction; and n is a refractive index of said substrate.

5. The information recording medium for land • groove recording according to claim 4, characterized in that a film thickness of said passivation film (2) is set to such that the reflectance in a crystal state of said recording film becomes nearly minimum.

6. The information recording medium for land • groove recording according to claim 5, characterized in that said passivation film (2) is formed of a dielectric film having a film thickness ranging from 15 to 150 nm and a refractive index falling within the range of from 1.5 to 2.5; said step height of the land • groove at an interface between said recording film (3) and said passivation film (2) is set to the range of from 70 to 90 nm; and said recording is adapted to be reproduced with a light beam having a wavelength ranging from 600 to 700 nm.

7. An information recording medium for land • groove recording (16), which comprises;

a substrate (1) provided with a land • groove;
a passivation film (2) formed on said substrate; and
a recording film (3) which is formed on said passivation film (2) and capable of generating a phase-change from a crystal state to an amorphous state and vice versa;

wherein a film thickness of said passivation film (2) is 150 nm or more, and a step height between the land and the groove at an interface between said recording film (3) and the passivation film (2) is confined to the range represented by the following formula (1);

$$\lambda/(6n) \leqq d_s \leqq \lambda/(5n) \qquad (1)$$

where $d_s$ is a step height of the land • groove at an interface between said recording film (3) and the passivation film (2); $\lambda$ is a wavelength of light beam to be employed in a reproduction; and n is a refractive index of said substrate.

8. The information recording medium for land • groove recording according to claim 7, characterized in that a film thickness of said passivation film (2) is set to a film thickness of the second cycle which renders the reflectance in a crystalline or amorphous state of said recording film (3) to take nearly a minimum in a periodical change in reflectance of the recording film with changes in film thickness of said passivation film (2).

9. The information recording medium for land • groove recording according to claim 8, characterized in that said passivation film (2) has a film thickness ranging from 220 to 320 nm and a refractive index falling within the range of from 1.5 to 2.5 in a wavelength of light beam to be employed; said step height of the land • groove at an interface between said recording film (3) and said passivation film (2) is set to the range of from 70 to 90 nm; and said recording is adapted to be reproduced with a light beam having a wavelength ranging from 600 to 700 nm.

10. An information recording medium for land • groove recording (16), which comprises;

a substrate (1) provided with a land • groove; and
a recording film (3) which is formed on said substrate (1) and capable of generating a phase-change from a crystal state to an amorphous state and vice versa;
wherein a step height between the land and the groove on the substrate side of said recording film (3) is confined to the range represented by the following formula (1), and said recording film (3) is constructed such that a phase difference between the crystal/amorphous states thereof can be substantially inhibited;

$$\lambda/(6n) \leqq d_s \leqq \lambda/(5n) \qquad (1)$$

where $d_s$ is a step height between the land and the groove on the front surface of said recording film (3); $\lambda$ is a wavelength of light beam to be employed in a reproduction; and n is a refractive index of said substrate.

11. The information recording medium for land • groove recording according to claim 10, characterized in that a passivation film (2) is interposed between said substrate (1) and said recording film (3), a film thickness of said passivation film (2) being set to such that the reflectance in an amorphous or crystalline state of said recording film (3) becomes nearly minimum.

12. The information recording medium for land • groove recording according to claim 11, characterized in that said passivation film (2) is formed of a dielectric film having a film thickness ranging from 50 to 150 nm, or from 220 to 320 nm and a refractive index falling within the range of from 1.5 to 2.5; a film thickness of said recording film (3) is in the range of from 10 to 30 nm; said step height at the land • groove on the front surface of said recording film is set to the range of from 70 to 90 nm; and said recording is adapted to be reproduced with a light beam having a wavelength ranging from 600 to 700 nm.

13. An information recording medium for land • groove recording (16), which comprises;

a substrate (1) provided with a land • groove;
a passivation film (2) formed on said substrate (1); and
a recording film (3) formed on said passivation film (2);
wherein a film thickness of said passivation film (2) formed on the land is almost the same as that formed on the groove.

14. An information recording medium for land • groove recording (16), which comprises;

a substrate (1) provided with a land • groove;
a passivation film (2) formed on said substrate (1); and
a recording film (3) formed on said passivation film (2);
wherein a groove depth of said substrate is almost equivalent to a step height between said land and said groove at an interface between said passivation film (2) and said recording film (3).

15. An information recording medium for land • groove recording (16), which comprises;

a substrate (1) provided with a land • groove;
a passivation film (2) formed on said substrate (1); and
a recording film (3) formed on said passivation film (2);
wherein a width of said land is almost the same as that of said groove at an interface between said passivation film (2) and said recording film (3).

16. The information recording medium for land • groove recording according to claim 15, characterized in that the width of said groove is larger than that of said land at the surface of said substrate (1).

17. The information recording medium for land • groove recording according to claim 16, characterized in that the width of said groove is 1.05 to 1.15 times as large as that of said land width at the surface of said substrate (1); a ratio between said groove width and said land width (groove width/land width) at the interface of the passivation film (2) -recording film (3) is 0.85 to 1.15; a depth of step height between said land and said groove at the interface of the passivation film (2) -recording film (3) is in the range of 70 to 90 nm; and said recording is adapted to be reproduced with a light beam having a wavelength ranging from 600 to 700 nm.

18. An information recording medium for land • groove recording (16), which comprises;

a substrate (1) provided with a land • groove;
a passivation film (2) formed on said substrate; and
a recording film (3) which is formed on said substrate and capable of generating a phase-change from a crystal state to an amorphous state and vice versa;
wherein a step height between the land and the groove at an interface between said recording film (3) and said passivation film (2) is confined to the range represented by the following formula (1), and a film thickness of said passivation film (2) is set to such that a reflectance in an amorphous state of said recording film becomes nearly a minimum, and that a reflectance in a crystalline state of said recording film (3) is within the range of 15 to 25%;

$$\lambda/(6n) \leqq d_s \leqq \lambda/(5n) \qquad (1)$$

where $d_s$ is a step height between the land and the groove on the front surface of said recording film (3); $\lambda$ is a wavelength of light beam to be employed in a reproduction; and n is a refractive index of said substrate (1).

19. An information recording medium for land • groove recording (16), which comprises;

a substrate (1) provided with a land • groove;
a passivation film (2) formed on said substrate (1); and
a recording film (3) which is formed on said passivation film (2);
wherein, as far as a portion of address mark which is recorded with a single cycle is concerned, a length of opening of a pit in the direction of track is almost the same as that of a portion other than said opening of pit at an interface between said passivation film (2) and said recording film (3).

20. The information recording medium for land • groove recording according to claim 19, which further comprises a land • groove switching portion (17), and said address mark is a mark which is formed on said land • groove switching portion (17).

21. The information recording medium for land • groove recording according to claim 19, characterized in that, as far as a portion of address mark which is recorded with a single cycle is concerned, a length of opening of a pit in the direction of track and the length of a portion other than said opening of pit satisfy the following formula (2) on the surface of the substrate;

$$G_l' > L_l' \qquad (2)$$

wherein $G_l'$ is a length of the opening of the pit in the direction of track on the substrate; and $L_l'$ is a length of a portion other than the opening of the pit in the direction of track on the substrate.

22. The information recording medium for land • groove recording according to claim 21, which further comprises a land • groove switching portion (17), and said address mark is a mark which is formed on said land • groove switching portion (17).

23. An information recording medium for land • groove recording (16), which comprises;

a substrate (1) provided with a land • groove;
a passivation film (2) formed on said substrate (1); and
a recording film (3) which is formed on said passivation film (2);
wherein, as far as an interface between said passivation film and said recording film is concerned, a length of opening of an address mark in a direction perpendicular to the track is almost a half of a length in said direction of a portion adjacent to and other than said opening of address mark.

24. The information recording medium for land • groove recording according to claim 23, which further comprises a land • groove switching portion (17), and said address mark is a mark which is formed on said land • groove switching portion (17).

25. The information recording medium for land • groove recording according to claim 23, characterized in that a length of opening the address mark in perpendicular to the direction of track and a length of a portion other than the opening of the address mark in perpendicular to the track satisfy the following formula (3) on the surface of the substrate;

$$2G_2' \geqq L_2' \qquad (3)$$

wherein $G_2'$ is a length of opening of the address mark in perpendicular to the direction of track on the substrate; and $L_2'$ is a length of a portion other than the opening of the address mark in perpendicular to the direction of track on the substrate.

26. The information recording medium for land • groove recording according to claim 25, which further comprises a land · groove switching portion (17), and said address mark is a mark which is formed on said land · groove switching portion (17).

27. A method of forming a passivation film on a substrate provided with a land · groove by means of a sputtering method, wherein a sputtering source is injected at an incident angle represented by the following formula (4);

$$\theta > \arctan (d_K/T_g) \qquad (4)$$

where $\theta$ is an incident angle to the substrate of the sputtering source; $d_K$ is a groove depth of the substrate; and $T_g$ is a groove width of the substrate.

28. An apparatus for forming a passivation film on a substrate provided with a land · groove by means of a sputtering method, wherein a target material (8) is arranged such that the sputtering source can be injected at an angle meeting a relationship represented by the following formula (5);

$$\theta_s > \arctan (d_K/T_g) \qquad (5)$$

wherein $\theta_s$ is an angle formed between a direction of the sputtering source directed from said target material (8) to the substrate and a main surface of the substrate (1); $d_K$ is a groove depth of the substrate; and $T_g$ is a groove width of the substrate.

F I G. 1

F I G. 2

F I G. 3

F I G. 4

FIG. 5

FIG. 6

F I G. 7

F I G. 8

F I G. 9

F I G. 10

F I G. 11

F I G. 12

F I G. 13

F I G. 14

## FIG. 15

## FIG. 16